# EUROPÄISCHE PATENTSCHRIFT

(11) **EP 3 919 784 B1**
(45) Veröffentlichungstag und Bekanntmachung des Hinweises auf die Patenterteilung: **31.07.2024**
(21) Anmeldenummer: 21176440.2
(22) Anmeldetag: 28.05.2021
(51) Int. Cl.: F16J 9/16, F16J 9/20

(54) **KOLBENRINGANORDNUNG**
PISTON RING ASSEMBLY
AGENCEMENT DE SEGMENT DE PISTON

(30) Priorität: 05.06.2020 DE 102020114944
(43) Veröffentlichungstag der Anmeldung: 08.12.2021
(73) Patentinhaber: STASSKOL GmbH, 39418 Stassfurt (DE)
(72) Erfinder: FLADE, Georg, 06114 Halle (DE)
(74) Vertreter: WSL Patentanwälte Partnerschaft mbB

(56) Entgegenhaltungen:
- EP-A1- 1 275 888
- EP-A1- 1 515 070
- CH-A- 482 953
- DE-A1- 3 148 488

## Beschreibung

Die vorliegende Erfindung betrifft eine Kolbenringanordnung und einen Kolben sowie einen Kolbenkompressor und dessen Verwendung.

Kolbenkompressoren werden eingesetzt, um Prozessgase in einem Verdichtungsraum zu verdichten. Anders als bei Verbrennungsmotoren findet bei Kolbenkompressoren keine unmittelbare Verbrennung des komprimierten Prozessgases in dem Verdichtungsraum statt. Kolbenkompressoren finden breite Anwendung in industriellen Prozessen wie beispielsweise der Verdichtung von Erdgas (Compressed Natural Gas, CNG).

Zur Verdichtung des Prozessgases weisen Kolbenkompressoren einen Kolben auf, der in einer Laufbuchse eine oszillierende, axiale Bewegung ausführt. Kolben und Laufbuchse berühren sich nicht, da zumindest einer der Reibpartner im Falle einer Berührung beschädigt würde. In axialer Richtung kann die Umgebung des Kolbens in einer Hochdruckseite, wo das Prozessgas verdichtet wird, und einer Niederdruckseite unterteilt werden. Das Prozessgas neigt aufgrund der Druckerhöhung dazu, von der Hochdruckseite ausgehend entlang des Kolbens hin zu der Niederdruckseite zu entweichen. Dieser Vorgang wird als Leckage bezeichnet.

Hersteller von Kolbenkompressoren sind ständig bemüht, die Leckage zu verringern. Bei den im Prozessgasbereich üblicherweise mit Kreuzkopf ausgeführten Maschinen handelt es sich dabei um innere Leckagen. Dies heißt, dass das Prozessgas nicht in die Atmosphäre entweicht. Die Leckagen verursachen aber einen Mehrbedarf an Energie bei der Verdichtung und damit höhere Betriebskosten. Zudem wird der erreichbare Förderstrom einer Verdichterstufe vermindert.

Zur Verringerung der Leckage ist es aus dem Stand der Technik bekannt, einen oder mehrere Kolbenringe um den Kolben herum anzuordnen. Die Kolbenringe dichten den Spalt zwischen Laufbuchse und Kolben ab und begrenzen auf diese Weise den Volumenstrom des Prozessgases. Da die Kolbenringe mit der Laufbuchse in Kontakt kommen und gegenüber der Laufbuchse eine Relativbewegung vollführen, werden sie regelmäßig aus Materialien mit guten Gleiteigenschaften hergestellt, beispielsweise aus PEEK oder PTFE-Compounds.

Aus den Dokumenten WO 97/19280 A1, EP 1 515 070 A1, DE 31 48 488 A1, EP 1 275 888 A1 und CH 482 953 A sind bereits verschiedene Kolbenringanordnungen bekannt. Die DE 31 48 488 A1 und die CH 482 953 A zeigen jeweils einen gebauten Kolben mit mehreren axial hintereinander angeordneten Kolbenscheiben, durch die Nuten gebildet werden, in denen jeweils ein Kolbenring angeordnet ist.

Ein Problem von kontaktierenden Kolbenringen bei hohen Differenzdrücken kann anwendungsabhängig die Erzeugung einer hohen Reibungswärme sein. Hier sind beispielsweise CO-Kompressoren wegen der Gefahr des Gaszerfalls oder O₂-Kompressoren wegen der brandfördernden Wirkung des Gases zu nennen.

Aufgrund des Kontakts mit der Laufbuchse unterliegen die Kolbenringe ferner einem Verschleiß. Der Verschleiß ist unter anderem von der Höhe des Drucks abhängig, auf den das Prozessgas verdichtet wird. Ungeschmierte Anwendungen sind hinsichtlich des Verschleißverhaltens wesentlich anspruchsvoller als geschmierte Anwendungen. Es ist weiterhin bekannt, dass der Verschleiß auch von der Art des Prozessgases und seiner Feuchtigkeit bzw. seinem Gehalt an verschleißfördernden Bestandteilen wie z.B. abrasiven Partikeln abhängt.

Sind die Kolbenringe verschlissen, so müssen sie ausgetauscht werden. Dieser Austausch ist mit einer Stilllegung des Kolbenkompressors verbunden. Insbesondere bei sehr hohen Druckdifferenzen von über 150 bar im Trockenlauf sowie bei sehr verschleißfördernden Gasen (beispielsweise H₂S) sind die Standzeiten von bekannten Kolbenringen unbefriedigend.

Es ist daher Aufgabe der Erfindung, die Standzeiten von Kolbenringen für Kolbenkompressoren zu verbessern.

Die Aufgabe wird durch eine Kolbenringanordnung gemäß Anspruch 1 gelöst.

Die Kolbenringanordnung umfasst einen sich um eine Hauptachse X erstreckenden Kolbenring, wobei der Kolbenring eine radial nach außen gerichtete Dichtfläche und eine radial nach außen gerichtete Anlagefläche aufweist. Die Dichtfläche ist radial außerhalb von der Anlagefläche angeordnet ist. Die Kolbenringanordnung weist ferner einen sich um die Hauptachse X erstreckenden Haltering mit einer radial nach innen gerichteten Haltefläche auf. Der Kolbenring und der Haltering sind so angeordnet, dass die Haltefläche und die Anlagefläche in radialer Richtung benachbart angeordnet sind. Mit anderen Worten überlappen sich die Haltefläche und die Anlagefläche in axialer Richtung.

Der Haltering ist demnach im Bereich der Anlagefläche radial außerhalb des Kolbenrings angeordnet. Die Dimensionierung des Halterings gibt damit den maximalen Verschleiß des Kolbenrings vor. Dies gilt insbesondere dann, wenn der Kolbenring in radialer Richtung nach innen vorgespannt ist. Der Kolbenring ist dadurch bestrebt, seinen entspannten Zustand einzunehmen und sich zu diesem Zwecke aufzubiegen. Durch den Haltering kann sich der Kolbenring aber trotz seiner Eigenspannung nicht beliebig weit in radialer Richtung nach außen aufbiegen. Der maximale Verschleiß wird damit begrenzt. Ferner wird durch diesen Aufbau die zwischen Kolbenring und Laufbuchse entstehende Reibungswärme begrenzt.

Die Anlagefläche kann zylindrisch oder in einem Winkel α ≤ 45° schräg zu der Hauptachse X verlaufen. Die Haltefläche kann zylindrisch oder in einem Winkel β ≤ 45° schräg zu der Hauptachse X verlaufen. Besonders bevorzugt ist α = β. Bei Winkeln α, β ≤ 45° wird der Kolbenring von dem Haltering sicher gehalten und neigt nicht zum Wegrutschen. Besonders bevorzugt sind die Winkel sogar kleiner als 20°, also α, β ≤ 20°.

Die Haltefläche und die Anlagefläche sind wie erwähnt benachbart angeordnet. Benachbart umfasst sowohl eine Anordnung, bei der die Flächen beabstandet sind, als auch eine Anordnung, bei der Flächen zumindest teilweise aneinander anliegen. Im Neuzustand sind die Flächen bevorzugt beabstandet, bilden also einen ersten Spalt. Dieser Spalt wird bei bestimmungsgemäßem Gebrauch durch den Verschleiß des Kolbenrings geringer, bis er gänzlich verschwindet. Der Kolbenring ist dann eingelaufen und verschleißt nicht weiter.

Der Kolbenring weist bevorzugt in Umfangsrichtung einen Spalt auf. Auf diese Weise wird ein Nachstellen der Dichtfläche des Kolbenrings bei auftretendem Anfangsverschleiß in radialer Richtung ermöglicht. Zudem erlaubt der Spalt ein Vorspannen des Kolbenrings.

Bei vorteilhaften Weiterbildungen ist der Kolbenring einteilig. Bei steifen Dichtwerkstoffen wie z.B. bei PEEK-Compounds wird dadurch ein effizienteres Vorspannen des Rings ermöglicht, wodurch der Halt des Kolbenrings an dem Haltering weiter verbessert wird. Zudem ermöglicht die Einteiligkeit eine kostengünstigere Herstellung, minimiert die Leckagepfade und verbessert ferner die Stabilität des Kolbenrings.

Im Gegensatz zu dem Kolbenring soll der Haltering in radialer Richtung nach außen möglichst wenig nachgiebig sein. Der Haltering ist daher bevorzugt in Umfangsrichtung geschlossen. Auf diese Weise ist der Haltering stabiler und der Kolbenring wird sicher gehalten. Der Haltering ist ferner bevorzugt einteilig. Auch dies fördert die Stabilität des Halterings.

Der Haltering weist bevorzugt zumindest einen radial verlaufenden Kanal auf. Radiale Kanäle ermöglichen einen Gasdurchtritt des entweichenden Prozessgases hin zu einem Bereich radial innerhalb des Kolbenrings. Der höhere Gasdruck des Prozessgases drückt den Kolbenring zusätzlich radial nach außen, wodurch wiederum die Abdichtung verbessert wird.

Wie oben erwähnt hält der Haltering den Kolbenring und begrenzt dessen Aufbiegen. Der Kolbenring besteht daher bevorzugt aus einem ersten Material mit einem Elastizitätsmodul E1 und der Haltering aus einem zweiten Material mit einem Elastizitätsmodul E2, wobei E2 > E1 ist. Der Kolbenring ist also durch sein Material elastischer als der Haltering. Zusätzliche Elastizität erhält der Kolbenring, wenn er wie oben beschrieben einen Spalt aufweist.

Das erste Material ist bevorzugt Polytetrafluorethylen (PTFE), ein PTFE-Compound oder ein PTFE basierter Verbundwerkstoff. Das zweite Material ist bevorzugt Polyetheretherketon (PEEK), ein PEEK-Compound, ein PEEK basierter Verbundwerkstoff oder ein Metall, insbesondere ein Lagermetall. PTFE ist zum einen ein Material mit einem niedrigen Reibwert. Zum anderen ist es ausreichend nachgiebig, um nach einem möglichen Anfangsverschleiß sicherzustellen, dass sich nach dem Schließen des anfänglichen Spaltes die Anlagefläche und die Haltefläche in einem umfänglichen Kontakt befinden.

Die Aufgabe der Erfindung wird auch mit einem Kolben mit einem sich entlang einer Hauptachse X erstreckenden Kern gelöst, um den zumindest zwei ringförmige Kolbenscheiben angeordnet sind, wobei die Kolbenscheiben zumindest eine um die Hauptachse X verlaufende, radial nach außen offene Nut ausbilden und wobei in der Nut eine Kolbenringanordnung nach der obigen Beschreibung angeordnet ist. Der Kolbenring und der Haltering werden von den Kolbenscheiben so gehalten, dass die Haltefläche und die Anlagefläche in radialer Richtung benachbart angeordnet sind.

Die Kolbenringanordnung kann insgesamt in radialer Richtung relativ zu den Kolbenscheiben beweglich sein. Der Kolbenring verschleißt genau so viel, bis Haltefläche und Anlagefläche aneinander liegen. Ein dann entstehender geringfügiger Verschleiß verursacht eine sehr geringe Leckage, die zur Verbesserung der Standzeit in Kauf genommen wird.

Der Kolben ist ein sogenannter gebauter Kolben. Bei seinem Aufbau werden die Kolbenscheiben nacheinander in axialer Richtung auf einen Kern geschoben. Die Kolbenscheiben werden anschließend so befestigt, dass sie keine Relativbewegung zum Kern vollführen können. In jeder Nut wird während des Aufbaus des Kolbens jeweils eine Kolbenringanordnung angeordnet. Die Kolbenscheiben und die Kolbenringanordnungen werden also abwechselnd auf dem Kern angeordnet. Auf diese Weise ist die Montage der Kolbenringanordnungen besonders einfach, da der Haltering in keiner Weise radial gedehnt werden muss.

Die Kolbenscheiben weisen bevorzugt einen L-förmigen Querschnitt auf. Dadurch bilden zwei axial aneinander liegende Kolbenscheiben automatisch eine Nut aus, in welcher die Kolbenringanordnung sicher gehalten wird. Die Nut weist bevorzugt einen rechteckigen Querschnitt auf, wodurch ebenfalls ein sicherer Halt der Kolbenringanordnung sichergestellt wird.

Die Kolbenringanordnung, insbesondere der Kolbenring, liegt bei bestimmungsgemäßem Gebrauch aufgrund des Drucks von der Hochdruckseite in axialer Richtung an der von der Hochdruckseite entfernten Seite der Nut an. Zwischen der der Hochdruckseite näherliegenden Seite der Nut und der Kolbenringanordnung, insbesondere dessen Haltering, wird bevorzugt ein zweiter Spalt gebildet. Durch diesen Spalt kann das unter Hochdruck stehende Gas in den Zwischenraum zwischen dem Innendurchmesser des Kolbenrings und dem Nutgrund einströmen und den Kolbenring gegen die Laufbuchse bzw. gegen den Haltering drücken. Insbesondere bei nichtzylindrischer Ausführung der Anlage- und Haltefläche wandert der Haltering mit zunehmenden Verschleiß in Richtung Hochdruckseite. Dadurch wird eine axiale Verspannung des Kolbenringes und des Halteringes erzeugt. Diese Verspannung fixiert die Anordnung auch bei wechselnden Drücken und beugt beispielsweise einer Beschädigung der Nuten durch Ausschlagen vor.

Da der Haltering insbesondere bei einer nicht zylindrischen Ausführung der Anlagefläche und Haltefläche an der der Hochdruckseite näherliegenden Seite der Nut anliegt, ist der Haltering mit zumindest einer Radialnut versehen, um die Gasströmung in Richtung Nutgrund zu verbessern.

Die Aufgabe der Erfindung wird auch durch einen Kolbenkompressor mit einer sich entlang einer Hauptachse X erstreckenden Laufbuchse gelöst, in der ein entlang der Hauptachse X beweglicher Kolben nach der obigen Beschreibung angeordnet ist. Die Dichtfläche des Kolbenrings liegt im Neuzustand an einer Innenseite der Laufbuchse an und verschleißt nach und nach, bis der Verschleiß von dem Haltering gestoppt wird.

Der Kolbenkompressor kann ein einfachwirkender oder ein doppeltwirkender Kolbenkompressor sein.

Bei einem einfachwirkenden Kolbenkompressor ist die Kolbenringanordnung bevorzugt derart in der Nut der Kolbenscheibe angeordnet, dass der Dichtabschnitt des Kolbenrings der Niederdruckseite zugewandt ist. Der Haltering ist dann der Hochdruckseite zugewandt. Bei bestimmungsgemäßem Gebrauch wird der Haltering dadurch an die der Niederdruckseite näherliegende Seite der Nut gedrückt.

Bei einem doppeltwirkenden Kolbenkompressor wechselt die Lage der Hochdruck- und Niederdruckseite je nach Arbeitsrichtung des Kolbens. Bei einem doppeltwirkenden Kolbenkompressor leistet der Kolben somit in beiden Richtungen Abdichtarbeit. Es ist daher vorteilhaft, bei einem doppeltwirkenden Kolbenkompressor einen Kolben mit mehreren erfindungsgemäßen Kolbenringanordnungen zu verwenden, wobei die Dichtabschnitte der Kolbenringe eines Teils der Kolbenringanordnungen der einen Seite des Kolbenkompressors und die Dichtabschnitte der Kolbenringe des anderen Teils der Kolbenringanordnungen der anderen, gegenüberliegenden Seite des Kolbenkompressors zugewandt sind. Die beiden Seiten des Kolbenkompressors sind wechselweise Niederdruck- und Hochdruckseite. Durch die beschriebene Anordnung der Kolbenringanordnung gibt es immer zumindest eine Kolbenringanordnung, die den Kolben erfindungsgemäß abdichtet.

Insbesondere ist es vorteilhaft, wenn die Kolbenringanordnungen eines derartigen Kolbens in zwei, vorzugsweise gleich große, Gruppen aufgeteilt werden, wobei die Gruppen entlang der Hauptachse X hintereinander angeordnet sind. Die Kolbenringanordnungen innerhalb einer Gruppe haben dabei die gleiche Orientierung. Jede Gruppe ist dann für die Abdichtung bei einer der beiden möglichen axialen Bewegungsrichtungen des Kolbens zuständig. Bevorzugt werden die beiden Gruppen jeweils benachbart zu der Seite des Kolbens angeordnet, welches auf der Hochdruckseite liegt, wenn die jeweilige Gruppe für die Abdichtung zuständig ist.

Die Hauptachse X kann horizontal, also senkrecht zur Gravitationsrichtung, vertikal oder schräg verlaufen. Ein Kolbenkompressor mit einer horizontal verlaufenden Hauptachse X wird auch als liegender Kompressor bezeichnet. Kolbenkompressoren mit schräg verlaufenden Hauptachsen werden je nach Bauart als V- oder W-Kompressor (auch V- oder W-Verdichter) bezeichnet.

Bei einer Verwendung in einem liegenden Kompressor, einem V-Kompressor oder einem W-Kompressor weist die erfindungsgemäße Kolbenringanordnung besondere Vorteile auf. Der Kolben ist bevorzugt über eine Kolbenstange mit einem Antrieb des Kolbenkompressors verbunden. Die Kolbenstange und/oder der Kolben sind bei Kompressoren an mehreren Lagerstellen gelagert. Aufgrund der Gravitation nutzen sich diese Lagerstellen bei den genannten Bauarten oder generell bei nicht-vertikaler Hauptachse X langfristig unten mehr ab als oben. Insgesamt senkt sich der Kolben dadurch mit der Zeit ab. Die Kolbenringanordnung ist von der Absenkung unabhängig, da sie sich in radialer Richtung gegenüber der Hauptachse X bewegen kann.

Der Kolbenkompressor ist besonders gut zur Komprimierung von Kohlenstoffmonooxid (CO), Sauerstoff (O₂) oder Schwefelwasserstoff (H₂S) geeignet. Zudem eignet sich der Kolbenkompressor besonders gut zur Komprimierung von Gasen auf Drücke über 150 bar, insbesondere im Trockenlauf, also bei ungeschmierten Verdichtern.

Die Erfindung wird nachfolgend anhand der Zeichnungen beispielhaft dargestellt und erläutert. Es zeigen dabei:
- Figur 1: einen Ausschnitt eines erfindungsgemäßen Kolbenkompressors in einer Schnittansicht;
- Figur 1a: das Detail A der Figur 1;
- Figur 2: eine erfindungsgemäße Kolbenringanordnung in einer perspektivischen Explosionsdarstellung.

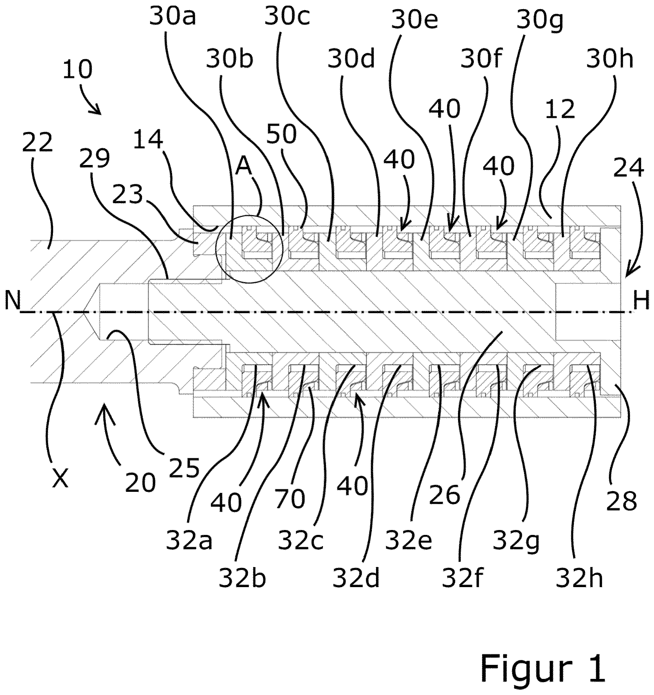

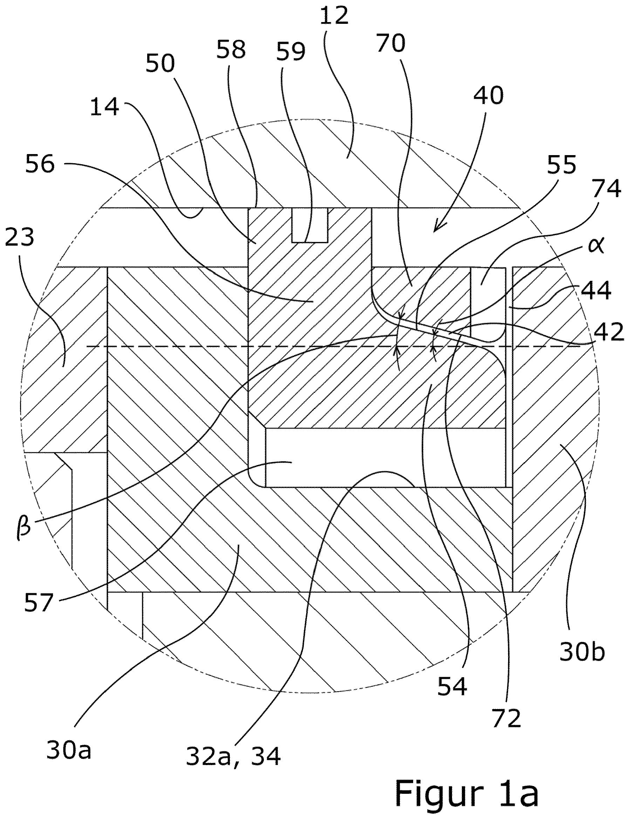

Die Figur 1 zeigt einen Ausschnitt eines erfindungsgemäßen Kolbenkompressors 10 mit einer zylinderförmigen Laufbuchse 12 und einem Kolben 20. Die Laufbuchse 12 und der Kolben 20 erstrecken sich entlang einer Hauptachse X. Die Hauptachse X liegt bei bestimmungsgemäßem Gebrauch horizontal, der Kolbenkompressor 10 ist demnach ein liegender Kolbenkompressor.

Die Laufbuchse 12 weist eine Innenseite 14 auf, welche die Gleitfläche für eine Kolbenringanordnung 40 des Kolbens 20 bildet. Nicht dargestellt ist ein Verdichtungsraum des Kolbenkompressors 10, in welchem Gase komprimiert werden. Der Verdichtungsraum liegt bezüglich des Kolbens 20 auf einer Hochdruckseite H. Bei bestimmungsgemäßem Gebrauch oszilliert der Kolben 20 entlang der Hauptachse X.

Der Kolben 20 weist eine Halterung 22 sowie einen Kern 24 und mehrere Kolbenscheiben 30a - 30h auf. Die Halterung 22 weist eine Bohrung mit einem Innengewinde 25 auf. Der Kern 24 weist einen Zylinderabschnitt 26 sowie einen endseitig an dem Zylinderabschnitt 26 befestigten Flansch 28 auf. Am gegenüberliegenden Ende weist der Zylinderabschnitt 26 ein Außengewinde 29 auf.

Die Kolbenscheiben 30a - 30h sind identisch und erstrecken sich jeweils um die Hauptachse X. Sie sind ringförmig und weisen einen L-förmigen Querschnitt auf.

Der Kolben 20 ist ein sogenannter gebauter Kolben. Bei seinem Aufbau werden die Kolbenscheiben 30a - 30h nacheinander in axialer Richtung auf den Kern 24 geschoben, wodurch benachbarte Kolbenscheiben 30a - 30h bzw. eine Kolbenscheibe 30h mit dem Flansch 28 mehrere umlaufende Nuten 32a - 32h bilden.

In jeder Nut wird während des Aufbaus des Kolbens 20 jeweils eine Kolbenringanordnung 40 angeordnet. Bei der Ausführungsform gemäß Figur 1 sind insgesamt acht identische Kolbenringanordnungen 40 vorgesehen. Die Kolbenringanordnungen 40 müssen bei der Montage aufgrund der L-Form der Kolbenscheiben 30a - 30h nicht in radialer Richtung gedehnt werden. Sie können vielmehr abwechselnd mit den Kolbenscheiben 30a - 30h in axialer Richtung auf den Kern 24 geschoben werden.

Sind alle Kolbenscheiben 30a - und 30h sowie alle Kolbenringanordnungen 40 auf den Kern 24 geschoben worden, so wird die Halterung 22 mit dem Innengewinde 25 auf das Außengewinde 29 des Kerns 24 geschraubt, wobei vorher zwischen der Halterung 22 und der benachbarten Kolbenscheibe 30a ein Spannring 23 angeordnet wird. Auf diese Weise werden die Kolbenscheiben 30a - 30h in axialer Richtung zwischen dem Spannring 23 und dem Flansch 28 eingespannt und dadurch sicher gehalten.

Das zu komprimierende Gas neigt aufgrund der Druckerhöhung dazu, von der Hochdruckseite H ausgehend entlang des Kolbens 20 hin zu einer Niederdruckseite N zu entweichen. Dieser Vorgang wird als Leckage bezeichnet. Die Kolbenringanordnungen 40 dienen dazu, die Leckage zu begrenzen.

Jede Kolbenringanordnung 40 weist einen Kolbenring 50 und einen Haltering 70 auf. Beide Ringe 50, 70 verlaufen um die Hauptachse X. Der Kolbenring 50 weist eine im Querschnitt L-förmige Grundform mit einem axial verlaufenden Halteabschnitt 54 und einem von dem Halteabschnitt 54 radial nach außen abstehenden Dichtabschnitt 56 auf (siehe Figur 1a). Der Dichtabschnitt 56 bildet eine radial nach außen gerichtete Dichtfläche 58 aus, welche bei bestimmungsgemäßem Gebrauch an der Innenseite 14 der Laufbuchse 12 anliegt.

Die Dichtfläche 58 ist von einer umlaufenden Nut 59 des Kolbenrings 50 unterbrochen. Die Nut 59 bewirkt eine Verwirbelung des Prozessgases, welche der Leckage entgegenwirkt.

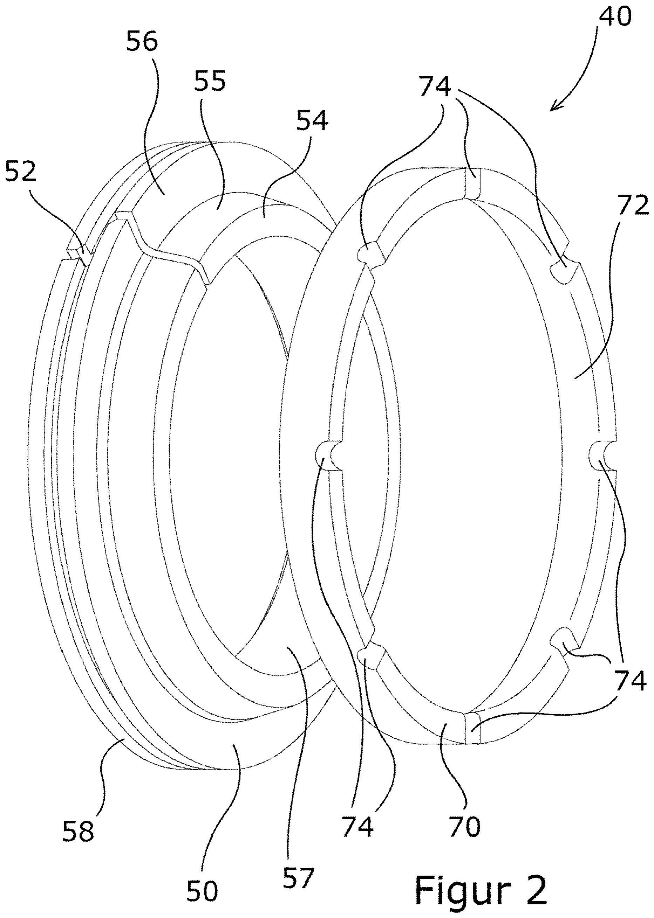

Der Kolbenring 50 ist umlaufend nicht geschlossen, sondern weist einen Spalt 52 auf (siehe Figur 2). Dadurch ist es möglich, den Kolbenring 50 in radialer Richtung auseinander oder zusammen zu spreizen. Der Spalt 52 verläuft in axialer Richtung vollständig durch den Dichtabschnitt 56, weist jedoch eine Stufe auf, die ein Hindernis für das entweichende Prozessgas darstellt und die Leckage verringert.

Der Kolbenring 50 weist ein Übermaß auf, sein Außendurchmesser an der Dichtfläche 58 ist also in entspanntem Zustand größer als der Innendurchmesser der Laufbuchse 12. Durch den Spalt 52 wird der Kolbenring 50 beim Einführen des Kolbens 20 in die Laufbuchse 12 in radialer Richtung zusammengedrückt, wodurch der Spalt 52 kleiner wird und der Kolbenring 50 eine Vorspannung in radialer Richtung erhält.

Der Kolbenring 50 weist ferner eine Anlagefläche 55 auf, welche von dem Haltabschnitt 54 ausgebildet wird. Die Anlagefläche 55 ist ebenfalls radial nach außen gerichtet und besitzt die Form der Mantelfläche eines Kegelsegments. Die Anlagefläche 55 verläuft in einem Winkel α schräg zu der Hauptachse X und damit zu der Horizontalen. Bei der dargestellten Ausführungsform beträgt der Winkel α in etwa 15°.

Bei anderen Ausführungsformen als der dargestellten besitzt die Anlagefläche 55 die Form der Mantelfläche eines Zylinders. Die Anlagefläche 55 verläuft dann nicht schräg, sondern parallel zu der Hauptachse X.

Der Kolbenring 50 umfasst ferner eine radial nach innen gerichtete Innenfläche 57. Die Innenfläche 57 berührt den jeweiligen Nutgrund 34 der Nuten 32a - 32h nicht. Der Kolbenring 50 weist somit einen Innendurchmesser auf, der größer ist als der Außendurchmesser der Kolbenscheiben 30a - 30h im Bereich der Nutgründe 34.

Der Verschleiß des Kolbenrings 50 wird durch den Haltering 70 begrenzt. Der Haltering 70 weist keinen Spalt auf, sondern ist in Umfangsrichtung geschlossen.

Der Haltering 70 weist eine radial nach innen gerichtete Haltefläche 72 auf, welche ebenfalls die Form der Mantelfläche eines Kegelsegments besitzt. Die Haltefläche verläuft in einem Winkel β schräg zu der Hauptachse X und damit zu der Horizontalen. Bei der dargestellten Ausführungsform beträgt der Winkel β in etwa 15°. Durch die Größen der Winkel α, β verlaufen die Haltefläche 72 und die Anlagefläche 55 somit im Wesentlichen parallel.

Bei anderen Ausführungsformen als der dargestellten besitzt die Haltefläche 72 die Form der Mantelfläche eines Zylinders. Die Haltefläche 72 verläuft dann nicht schräg, sondern parallel zu der Hauptachse X.

Der Kolbenring 50 und der Haltering 70 werden von den Kolbenscheiben 30a - 30h so gehalten, dass die Haltefläche 72 und die Anlagefläche 55 in radialer Richtung benachbart angeordnet sind. Das schließt jedoch nicht aus, dass die Ringe 50, 70 ein axiales Spiel haben, sich also axial geringfügig bewegen können.

Der Kolbenring 50 ist in radialer Richtung nach innen vorgespannt. Im Neuzustand (siehe Figur 1a) hält der Dichtabschnitt 56 den Haltabschnitt 54 so weit von der Innenseite 14 auf Abstand, dass die Haltefläche 72 und die Anlagefläche 55 nicht aneinander liegen. Die Anlagefläche 55 und die Haltefläche 72 bilden auf diese Weise einen ersten Spalt 42. Im Betrieb wird der Kolbenring 50 durch den Druck des Prozessgases in Richtung der Niederdruckseite N gegen die angrenzende Kolbenscheibe 30a - 30h gedrückt. Zwischen dem Haltering 70 und der daran in Richtung der Hochdruckseite H angrenzenden Kolbenscheibe 30a - 30h wird ein zweiter Spalt 44 gebildet.

Im Betrieb verschleißt der Kolbenring 50 nach und nach im Bereich des Dichtabschnitts 56. Durch die Vorspannung des Kolbenrings 50 liegt die Dichtfläche 58 jedoch auch nach einem gewissen Verschleiß weiterhin an der Innenseite 14 an. Dieser Vorgang ist grundsätzlich gewünscht, da sich die Dichtfläche 58 dadurch optimal an die Innenseite anpasst. Ist ein gewisses Maß an Verschleiß erreicht, so liegt die Anlagefläche 55 an der Haltefläche 72 an, das heißt, dass sich der Spalt 42 geschlossen hat. Der Kolbenring 50 verschleißt dann noch geringfügig weiter, bis die Dichtfläche 58 einen kleinen Abstand zu der Innenseite 14 aufweist und nicht mehr mit der Innenseite 14 in Kontakt kommt. Dadurch wird eine gewisse Leckage in Kauf genommen. Andererseits wird der Verschleiß des Kolbenrings 50 begrenzt und dadurch dessen Lebensdauer verlängert.

Der Haltering 70 weist acht in Umfangsrichtung gleichmäßig verteilte Radialnuten 74 auf (Figur 2). In anderen Ausführungsformen können stattdessen auch Radialbohrungen vorgesehen sein. Die Radialnuten 74 bewirken, dass das Prozessgas in den jeweiligen Nutgrund 34 der Nuten 32a - 32h gelangt. Dadurch werden die Kolbenringe 40 radial nach außen gedrückt, wodurch die Abdichtung zwischen dem jeweiligen Kolbenring 40 und der Laufbuchse 12 verbessert wird.

### Bezugszeichenliste

- 10: Kolbenkompressor
- 12: Laufbuchse
- 14: Innenseite

- 20: Kolben
- 22: Halterung
- 24: Kern
- 25: Innengewinde
- 26: Zylinderabschnitt
- 28: Flansch
- 29: Außengewinde

- 30a - 30h: Kolbenscheibe
- 32a - 32h: Nut
- 34: Nutgrund

- 40: Kolbenringanordnung
- 42: erster Spalt
- 44: zweiter Spalt

- 50: Kolbenring
- 52: Spalt
- 54: Halteabschnitt
- 55: Anlagefläche
- 56: Dichtabschnitt
- 57: Innenfläche
- 58: Dichtfläche
- 59: Nut
- 70: Haltering
- 72: Haltefläche
- 74: Radialnut

- H: Hochdruckseite
- N: Niederdruckseite
- X: Hauptachse

- α: Winkel
- β: Winkel

## Patentansprüche

1. Kolbenringanordnung (40) mit einem sich um eine Hauptachse (X) erstreckenden Kolbenring (50), wobei der Kolbenring (50) eine radial nach au-βen gerichtete Dichtfläche (58) und eine radial nach außen gerichtete Anlagefläche (55) aufweist, wobei die Dichtfläche (58) radial außerhalb von der Anlagefläche (55) angeordnet ist, und mit einem sich um die Hauptachse (X) erstreckenden Haltering (70) mit einer radial nach innen gerichteten Haltefläche (72), wobei der Kolbenring (50) und der Haltering (70) so angeordnet sind, dass die Haltefläche (72) und die Anlagefläche (55) in radialer Richtung benachbart angeordnet sind, wobei die Kolbenringanordnung (40) geeignet ist, in einer von zwei ringförmigen Kolbenscheiben (30a - 30h) gebildeten, um die Hauptachse (X) verlaufenden, radial nach außen offenen Nut (32a - 32h) angeordnet zu werden,
**dadurch gekennzeichnet, dass** der Haltering (70) in Umfangsrichtung geschlossen ist.

2. Kolbenringanordnung (40) nach Anspruch 1,
**dadurch gekennzeichnet, dass** der Kolbenring (50) in Umfangsrichtung einen Spalt (52) aufweist.

3. Kolbenringanordnung (40) nach Anspruch 1 oder 2,
**dadurch gekennzeichnet, dass** der Kolbenring (50) in radialer Richtung nach innen vorgespannt ist.

4. Kolbenringanordnung (40) nach einem der vorhergehenden Ansprüche, **dadurch gekennzeichnet, dass** die Anlagefläche (55) in einem Winkel α ≤ 45° schräg zu der Hauptachse (X) verläuft.

5. Kolbenringanordnung (40) nach einem der vorhergehenden Ansprüche, **dadurch gekennzeichnet, dass** die Haltefläche (72) in einem Winkel β ≤ 45° schräg zu der Hauptachse (X) verläuft.

6. Kolbenringanordnung (40) nach einem der vorhergehenden Ansprüche, **dadurch gekennzeichnet, dass** der Kolbenring (50) einteilig ist.

7. Kolbenringanordnung (40) nach einem der vorhergehenden Ansprüche, **dadurch gekennzeichnet, dass** der Haltering (70) einteilig ist.

8. Kolbenringanordnung (40) nach einem der vorhergehenden Ansprüche, **dadurch gekennzeichnet, dass** der Haltering (70) zumindest einen radial verlaufenden Kanal (74) aufweist.

9. Kolbenringanordnung (40) nach einem der vorhergehenden Ansprüche, **dadurch gekennzeichnet, dass** der Kolbenring (50) aus einem ersten Material mit einem Elastizitätsmodul E1 und der Haltering (70) aus einem zweiten Material mit einem Elastizitätsmodul E2 besteht, wobei E2 > E1 ist.

10. Kolben (20) mit einem sich entlang einer Hauptachse (X) erstreckenden Kern (24), um den zumindest zwei ringförmige Kolbenscheiben (30a - 30h) angeordnet sind, wobei die Kolbenscheiben (30a - 30h) zumindest eine um die Hauptachse (X) verlaufende, radial nach außen offene Nut (32a - 32h) ausbilden, wobei in der Nut (32a - 32h) eine Kolbenringanordnung (40) nach einem der vorhergehenden Ansprüche angeordnet ist.

11. Kolben (20) nach Anspruch 10,
**dadurch gekennzeichnet, dass** die Kolbenringanordnung (40) insgesamt in radialer Richtung relativ zu den Kolbenscheiben (30a - 30h) beweglich ist.

12. Kolbenkompressor (10) mit einer sich entlang einer Hauptachse (X) erstreckenden Laufbuchse (12), in der ein entlang der Hauptachse (X) beweglicher Kolben (20) nach Anspruch 10 oder 11 angeordnet ist.

13. Kolbenkompressor (10) gemäß Anspruch 12,
**dadurch gekennzeichnet, dass** die Hauptachse (X) horizontal oder schräg verläuft.

14. Kolbenkompressor (10) gemäß Anspruch 12 oder 13,
**dadurch gekennzeichnet, dass** der Kolbenkompressor (10) einfachwirkend ist und die Kolbenringanordnung (40) derart in der Nut (32 - 32h) der Kolbenscheibe (30a - 30h) angeordnet ist, dass der Dichtabschnitt (56) des Kolbenrings (50) der Niederdruckseite (N) zugewandt ist.

15. Kolbenkompressor (10) gemäß einem der Ansprüche 12 oder 13,
**dadurch gekennzeichnet, dass** der Kolbenkompressor (10) doppeltwirkend ist und einen Kolben (20) mit mehreren Kolbenringanordnungen (40) umfasst, wobei die Dichtabschnitte (56) der Kolbenringe (50) eines Teils der Kolbenringanordnungen (40) der einen Seite des Kolbenkompressors (10) und die Dichtabschnitte (56) der Kolbenringe (50) des anderen Teils der Kolbenringanordnungen (40) der anderen, gegenüberliegenden Seite des Kolbenkompressors (10) zugewandt sind.

16. Verwendung des Kolbenkompressors (10) nach einem der Ansprüche 12 bis 15 zur Komprimierung von Kohlenstoffmonoxid (CO), Sauerstoff (O₂) oder Schwefelwasserstoff (H₂S).

## Claims

1. Piston ring arrangement (40) with a piston ring (50) encircling a main axis (X), the piston ring (50) having a sealing surface (58) directed radially outward and a contact surface (55) directed radially outward, the sealing surface (58) being radially outside of the contact surface (55), and with a retaining ring (70) encircling the main axis (X) with a retaining surface (72) directed radially inward, the piston ring (50) and the retaining ring (70) being arranged such that the retaining surface (72) and the contact surface (55) are adjacent in the radial direction, wherein the piston ring arrangement (40) is suitable to be arranged in a groove (32a-32h), which is formed by two annular piston discs (30a-30h), which encircles the main axis (X) and which is open radially outward,
**characterized in that** the retaining ring (70) is closed circumferentially.

2. Piston ring arrangement (40) according to claim 1, **characterized in that** the piston ring (50) has a gap (52) in the circumference.

3. Piston ring arrangement (40) according to claim 1 or 2, **characterized in that** the piston ring (50) is pretensioned inward in the radial direction.

4. Piston ring arrangement (40) according to one of the preceding claims, **characterized in that** the contact surface (55) runs oblique to the main axis (X) at an angle α ≤ 45°.

5. Piston ring arrangement (40) according to one of the preceding claims, **characterized in that** the retaining surface (72) runs oblique to the main axis (X) at an angle β ≤ 45°.

6. Piston ring arrangement (40) according to one of the preceding claims, **characterized in that** the piston ring (50) is one piece.

7. Piston ring arrangement (40) according to one of the preceding claims, **characterized in that** the retaining ring (70) is one piece.

8. Piston ring arrangement (40) according to one of the preceding claims, **characterized in that** the retaining ring (70) has at least one radially extending channel (74).

9. Piston ring arrangement (40) according to one of the preceding claims, **characterized in that** the piston ring (50) consists of a first material with a modulus of elasticity E1, and the retaining ring (70) consists of a second material with a modulus of elasticity E2, where E2 > E1.

10. Piston (20) with a core (24) extending along a main axis (X), encircled by at least two annular piston discs (30a-30h), the piston discs (30a-30h) forming at least one groove (32a-32h) open radially outward and encircling the main axis (X), and wherein a piston ring arrangement (40) according to one of the preceding claims is situated in the groove (32a-32h).

11. Piston (20) according to claim 10, **characterized in that** the piston ring arrangement (40) is movable overall in the radial direction relative to the piston discs (30a-30h).

12. Reciprocating compressor (10) having a liner (12) extending along a main axis (X) and in which there is a piston (20) that can move along the main axis (X) according to one of claims 10 or 11.

13. Reciprocating compressor (10) according to claim 12, **characterized in that** the main axis (X) runs horizontally or obliquely.

14. Reciprocating compressor (10) according to claim 12 or 13, **characterized in that** the reciprocating compressor (10) is single-acting and the piston ring arrangement (40) is situated in the groove (32 - 32h) of the piston disc (30a - 30h) in such a way that the sealing section (56) of the piston ring (50) faces the low-pressure side (N).

15. Reciprocating compressor (10) according to one of claims 12 or 13, **characterized in that** the reciprocating compressor (10) is double-acting and comprises a piston (20) with several piston ring arrangements (40), the sealing sections (56) of the piston rings (50) of a part of the piston ring arrangements (40) facing one side of the reciprocating compressor (10), and the sealing sections (56) of the piston rings (50) of the other part of the piston ring arrangements (40) facing the other, opposite side of the reciprocating compressor (10).

16. Use of the reciprocating compressor (10) according to one of claims 12 to 15 for the compression of carbon monoxide (CO), oxygen (O₂) or hydrogen sulfide (H₂S).

## Revendications

1. Agencement de segment de piston (40) comprenant un segment de piston (50) s'étendant autour d'un axe principal (X), le segment de piston (50) comprenant une surface d'étanchéité (58) orientée radialement vers l'extérieur et une surface d'appui (55) orientée radialement vers l'extérieur, la surface d'étanchéité (58) étant disposée radialement à l'extérieur de la surface d'appui (55), et comprenant une bague de maintien (70) s'étendant autour de l'axe principal (X) et ayant une surface de maintien (72) orientée radialement vers l'intérieur, le segment de piston (50) et la bague de maintien (70) étant disposés de façon que la surface de maintien (72) et la surface d'appui (55) soient adjacentes l'une à l'autre en direction radiale, l'agencement de segment de piston (40) étant approprié pour être disposé dans une rainure formée par deux disques annulaires de piston (30a - 30h), s'étendant autour de l'axe principal (X) et radialement ouverte vers l'extérieur (32a - 32h),
**caractérisé en ce que** la bague de maintien (70) est fermée dans la direction circonférentielle.

2. Agencement de segment de piston (40) selon la revendication 1, **caractérisé en ce que** le segment de piston (50) comprend une fente (52) dans la direction circonférentielle.

3. Agencement de segment de piston (40) selon la revendication 1 ou 2, **caractérisé en ce que** le segment de piston (50) est précontraint vers l'intérieur en direction radiale.

4. Agencement de segment de piston (40) selon l'une des revendications précédentes, **caractérisé en ce que** la surface d'appui (55) s'étend sous un angle α ≤ 45 ° obliquement à l'axe principal (X).

5. Agencement de segment de piston (40) selon l'une des revendications précédentes, **caractérisé en ce que** la surface de maintien (72) s'étend sous un angle α ≤ 45 ° obliquement à l'axe principal (X).

6. Agencement de segment de piston (40) selon l'une des revendications précédentes, **caractérisé en ce que** le segment de piston (50) est d'une seule pièce.

7. Agencement de segment de piston (40) selon l'une des revendications précédentes, **caractérisé en ce que** la bague de maintien (70) est d'une seule pièce.

8. Agencement de segment de piston (40) selon l'une des revendications précédentes, **caractérisé en ce que** la bague de maintien (70) comprend au moins un canal (74) s'étendant radialement.

9. Agencement de segment de piston (40) selon l'une des revendications précédentes, **caractérisé en ce que** le segment de piston (50) est fait d'un premier matériau avec un module d'élasticité E1 et que la bague de maintien (70) est fait d'un deuxième matériau avec un module d'élasticité E2, sachant que E2 > E1.

10. Piston (20) comprenant un noyau (24) qui s'étend le long d'un axe principal (X) et autour duquel sont disposés au moins deux disques annulaires de piston (30a-30h), les disques de piston (30a-30h) formant au moins une rainure (32a - 32h) radialement ouverte vers l'extérieur et s'étendant autour de l'axe central (X), dans la rainure (32a-32h), un agencement de segment de piston (40) selon l'une des revendications précédentes étant disposé.

11. Piston (20) selon la revendication 10, **caractérisé en ce que**, dans son ensemble, l'agencement de segment de piston (40) est mobile en direction radiale par rapport aux disques de piston (30a-30h).

12. Compresseur à piston (10) comprenant une chemise (12) s'étendant le long d'un axe central (X) et dans laquelle est disposé un piston (20) selon la revendication 10 ou 11, mobile le long de l'axe principal (X).

13. Compresseur à piston (10) selon la revendication 12, **caractérisé en ce que** l'axe principal (X) est disposé horizontalement ou obliquement.

14. Compresseur à piston (10) selon la revendication 12 ou 13, **caractérisé en ce que** le compresseur à piston (10) est à simple effet et que l'agencement de segment de piston (40) est disposé dans la rainure (32-32h) du disque de piston (30a-30h) de manière telle que le segment d'étanchéité (56) du segment de piston (50) soit orienté vers le côté de basse pression (N).

15. Compresseur à piston (10) selon l'une des revendications 12 ou 13, **caractérisé en ce que** le compresseur à piston (10) est à double effet et qu'il comprend un piston (20) avec plusieurs agencements de segment de piston (40), les segments d'étanchéité des segments de piston d'une partie des agencements de segment de piston (40) d'un côté du compresseur à piston (10) et les segments d'étanchéité (56) des segments de piston (50) de l'autre partie des agencements de piston (40) étant orientés vers l'autre côté, le côté opposé du compresseur à piston.

16. Utilisation du compresseur à piston (10) selon l'une des revendications 12 à 15 pour compresser du monoxyde de carbone (CO), de l'oxygène (O₂) ou de l'acide sulfhydrique (H₂S).
